# EUROPÄISCHE PATENTANMELDUNG

(11) **EP 1 903 018 A2**
(43) Veröffentlichungstag der Anmeldung: **26.03.2008**
(21) Anmeldenummer: 07017842.1
(22) Anmeldetag: 12.09.2007
(51) Int. Cl.: C04B 41/85, C09C 1/00, B01J 35/00

(54) **Photokatalytisch aktive Engobe oder Glasur für Dachziegel**

(30) Priorität: 20.09.2006 DE 102006044075
(71) Anmelder: Merck Patent GmbH, 64293 Darmstadt (DE); Jacobi Tonwerke GmbH, 37434 Bilshausen (DE)
(72) Erfinder: Kuntz, Matthias, Dr., 64342 Seeheim-Jugenheim (DE); Salié, André, 30449 Hannover (DE); Aschoff, Henning, 37115 Duderstadt (DE)

(57) **Zusammenfassung**

Die vorliegende Erfindung betrifft photokatalytisch aktive Engoben und Glasuren für Dachziegel, ein Verfahren zu deren Herstellung und insbesondere die Verwendung von vorzugsweise handelsüblichen Interferenzpigmenten als photokatalytisch aktives Material zur Herstellung solcher Engoben und Glasuren, sowie damit beschichtete photokatalytisch aktive Dachziegel.

## Beschreibung

Die vorliegende Erfindung betrifft die Herstellung photokatalytisch aktiver Engoben und Glasuren von Dachziegeln, und insbesondere die Verwendung handelsüblicher Interferenzpigmente als photokatalytisch aktives Material für solche Engoben oder Glasuren.

Selbstreinigende Oberflächen haben in den letzten Jahren zunehmend an Bedeutung gewonnen. Insbesondere seit das Selbstreinigungsverhalten natürlicher Oberflächen entdeckt und der so genannte Lotus-*Effect*® erfunden wurde, sind viele technische Anwendungsmöglichkeiten für selbstreinigende Oberflächen untersucht worden.

Ein spezielles Anwendungsgebiet des Lotus-*Effects*® sind beispielsweise Dachziegel und damit gedeckte Dächer, die als selbstreinigend bezeichnet werden. Diese Dachziegel weisen eine poröse, mikro- bis nanostrukturierte Oberfläche auf, die die Adhäsion von Schmutzpartikeln minimiert, so dass diese mit dem Regenwasser abgewaschen werden können.

Es ist jedoch auch bekannt, dass Titandioxid eine photokatalytische Aktivität aufweist, die bei Sonneneinstrahlung zur Zersetzung von anhaftendem organischen Material führt. Diese photokatalytische Aktivität von Titandioxid ist insbesondere in Lacken und Anstrichen mit organischen Inhaltsstoffen, in denen partikuläres Titandioxid häufig als Weißpigment eingesetzt wird, von Nachteil, wird jedoch in anderen Anwendungen auch als erwünschte Eigenschaft ausgenutzt.

Bei der Herstellung selbstreinigender Dachziegel sind in letzter Zeit beide oben genannten Effekte miteinander kombiniert worden, um zu guten Ergebnissen zu gelangen.

So werden beispielsweise in WO 2004/005577 und WO 2005/105304 Substrate mit einer photokatalytischen Schicht beschrieben, die photokatalytisch aktive TiO₂-Teilchen enthält, wobei die TiO₂-Verteilung einen Gradienten ausbildet und die Teilchen an der Oberfläche der photokatalytischen Schicht angereichert sind. Das eingesetzte TiO₂ wird dabei über ein Sol-Gel-Verfahren gewonnen und liegt bevorzugt nanoskalig, d.h. mit einer mittleren Teilchengröße im Nanometerbereich vor. Bevorzugt werden dotierte, oberflächenmodifizierte Titandioxidpartikel eingesetzt. Die photokatalytischen Schichten werden auf die gewünschten Substrate aufgebracht und bei moderater Wärmezufuhr getrocknet. Die Substrate können dabei aus Oxidkeramik bestehen.

In WO 01/79141 wird ein Verfahren zur Erzeugung einer Selbstreinigungseigenschaft einer Oberfläche, insbesondere eines Dachziegels, beschrieben, bei dem die Oberfläche mit einer Schicht aus Titandioxid der Kristallform Anatas beschichtet wird, wobei diese Schicht über ein Sol-Gel-Verfahren erzeugt wird. Vor, bei oder nach dieser Beschichtung kann die beschichtete Oberfläche eine Strukturierung erhalten, welche als Voraussetzung für den selbstreinigenden Effekt beschrieben wird.

In WO 03/101912 und WO 03/101913 werden keramische Formkörper offenbart, die eine selbstreinigende Oberfläche in Form einer Beschichtung aufweisen, welche eine spezifische Oberfläche von 25 bis 200 m²/g besitzt. Diese hohe spezifische Oberfläche kann durch verschiedene Verfahren und Materialien erzeugt werden. Zusätzlich kann der Formkörper oder die Beschichtung photokatalytisch aktive Materialien enthalten, die beispielsweise aus partikulärem TiO₂ in der Anatas-Modifikation bestehen.

Die beschriebenen Verfahren zur Erzeugung selbstreinigender oxidkeramischer Oberflächen sind durch die nötige Mehrfachmodifizierung der Oberflächen sehr aufwändig in der Herstellung. Die verschiedenen Bearbeitungsstufen der Oberflächen erfordern mehrere verschiedenartige Produktionsabläufe, die in das allgemein übliche Herstellungsverfahren von Oxidkeramik und insbesondere Dachziegeln nur mit großem zusätzlichem Aufwand zu integrieren sind. In den Fällen, in denen TiO₂ in partikulärer Form an der Oberfläche der Oxidkeramik eingesetzt wird, tritt außerdem eine Agglomerationsneigung der Titandioxidpartikel in Erscheinung, die eine gleichmäßige Verteilung der Partikel auf der Oberfläche der behandelten Substrate und damit deren gleichmäßig über die gesamte Oberfläche wirkende photokatalytische Aktivität behindert. Es hat sich außerdem herausgestellt, dass TiO₂-Partikel in Anwesenheit von Aluminiumdioxid, das Bestandteil aller üblichen Tone, Engoben und Glasuren ist, bei den beim Brennen der Engoben und Glasuren üblichen Temperaturen von ca. 800°C und höher nicht beständig sind und damit ihre photokatalytische Aktivität zumindest teilweise verlieren. Aus diesem Grunde werden sie mit guter Wirksamkeit nur in solchen Beschichtungen auf Engoben und Glasuren von Dachziegeln eingesetzt, die nach dem letzten Brennvorgang zusätzlich aufgebracht werden. Eine gute Haftung dieser Schichten am Substrat ist bei dieser Art der Aufbringung jedoch nicht immer gewährleistet. Insbesondere liegen einzelne TiO₂-Partikel an der Oberfläche der Schicht vor, die durch verschiedenste Umwelteinflüsse mechanisch entfernt werden können, wodurch die photokatalytische Wirkung nachlässt und die Oberflächenstruktur gestört wird.

Werden zudem TiO₂-Nanopartikel als photokatalytisch aktives Material eingesetzt, sind auch die damit einher gehenden möglichen Gefahren für Hersteller und Anwender nicht zu unterschätzen. Es ist mittlerweile bekannt, dass nanopartikuläres Titandioxid sowohl über die Lungen als auch über die Haut oder den Verdauungstrakt vom Menschen aufgenommen werden und dort zu Anreicherungen führen kann. Bei der Anwendung insbesondere auf der Oberseite von Dachziegeln ist auch der Übergang von beträchtlichen Mengen an Nanopartikeln in das Grundwasser nicht auszuschließen. Selbst wenn zum tatsächlichen Gefährdungspotential noch keine detaillierten Untersuchungen vorliegen, stellt eine Vermeidung des Einsatzes von TiO₂-Nanopartikeln eine Verringerung eines möglichen Gesundheitsrisikos für Hersteller und Anwender dar. Es wäre daher wünschenswert, photokatalytisch aktive Engoben und Glasuren für Dachziegel zur Verfügung stellen zu können, die nicht auf der Basis von nanopartikulärem Material hergestellt sind, aber über eine gute Wirksamkeit verfügen.

Es ist weiterhin bekannt, Engoben oder Glasuren von Ziegel- Ton- und Keramikwaren Interferenzpigmente bzw. Perlglanzpigmente zur Erzielung besonderer Farbeffekte zuzusetzen.

So werden in DE 40 07 037 glasurstabile Farbpigmente auf der Basis von mit Metalloxiden beschichteten plättchenförmigen Substraten beschrieben, die für Engoben und Glasuren eine verbesserten Stabilität aufweisen. Bevorzugt bestehen diese Pigmente aus plättchenförmigem Glimmer, der mit einer Beschichtung aus Eisenoxid und Aluminiumoxid versehen ist. Solche Pigmente verleihen den damit versehenen Engoben und Glasuren ein orangefarbenes bis rotes Aussehen.

Aus DE 198 59 420 ist eine Engobe mit Perlglanzeffekt für Ziegel-, Ton- und Keramikwaren bekannt, die einen hohen Dekorationswert aufweist und fest auf dem Untergrundmaterial haftet. Bevorzugt werden Glimmerpigmente eingesetzt, die mit Eisenoxid beschichtet sind, was zu stark farbigen Produkten, beispielsweise Dachziegeln, führt.

Engoben oder Glasuren, in denen handelsübliche Interferenz- oder Perlglanzpigmente als photokatalytisch wirksame Bestandteile eingesetzt werden, sind nicht bekannt.

Es war die Aufgabe der vorliegenden Erfindung, ein photokatalytisch aktives Material für Engoben und Glasuren von Dachziegeln zur Verfügung zu stellen, welches leicht verfügbar und ökonomisch vorteilhaft bei guter photokatalytischer Aktivität eingesetzt werden kann, gegebenenfalls gleichzeitig zur Modifikation der Farbeigenschaften der Engoben und Glasuren verwendbar ist und nicht aus nanopartikulärem Material besteht.

Eine weitere Aufgabe der Erfindung bestand darin, photokatalytisch wirksame Glasuren und Engoben für Dachziegel zur Verfügung zu stellen, die ein Bewachsen, Veralgen oder Bemoosen von Dachziegeln nachhaltig verhindern und dauerhaft mit dem Dachziegel verbunden sind.

Außerdem bestand die Aufgabe der Erfindung darin, ein einfaches Verfahren aufzuzeigen, welches die Herstellung von photokatalytisch aktiven Engoben und Glasuren für Dachziegel erlaubt und im wesentlichen mit den gängigen Verfahren zur Herstellung nicht photokatalytisch aktiver Glasuren und Engoben von Dachziegeln übereinstimmt und ohne zusätzliche Arbeitsschritte oder Nachbehandlung nach dem Brand ausgeführt werden kann.

Zusätzlich bestand eine Aufgabe der Erfindung darin, photokatalytisch aktive Dachziegel zur Verfügung zu stellen.

Überraschenderweise wurde nun gefunden, dass Interferenzpigmente, welche eine Schicht aus Titandioxid aufweisen, vorzugsweise handelsübliche Interferenzpigmente, sich hervorragend als photokatalytisch aktives Material in Engoben und Glasuren für Dachziegel eignen und ihre Zugabe im üblichen Herstellungsprozess von Dachziegeln im wesentlichen ohne maßgebliche Änderung der Prozessstufen erfolgen kann.

Gegenstand der vorliegenden Erfindung ist deshalb die Verwendung von Interferenzpigmenten auf der Basis von mit einer Schicht aus Titandioxid beschichteten temperaturstabilen plättchenförmigen Substraten als photokatalytisch aktives Material in Engoben und Glasuren von Dachziegeln.

Ein weiterer Gegenstand der vorliegenden Erfindung ist eine photokatalytisch wirksame Engobe oder Glasur für Dachziegel, welche als photokatalytsch aktives Material Interferenzpigmente auf der Basis von mit einer Schicht aus Titandioxid beschichteten temperaturstabilen plättchenförmigen Substraten enthält.

Des Weiteren ist ein Verfahren zur Herstellung einer photokatalytisch aktiven Engobe oder Glasur für Dachziegel Gegenstand der vorliegenden Erfindung, bei welchem eine Grundmasse für eine Engobe oder Glasur mit Interferenzpigmenten auf der Basis von mit einer Schicht aus Titandioxid beschichteten temperaturstabilen plättchenförmigen Substraten als photokatalytisch aktive Substanz homogen gemischt und auf mindestens eine Oberfläche eines gebrannten oder ungebrannten Dachziegels in Form einer ein- oder mehrschichtigen Beschichtung aufgebracht wird, so dass zumindest die äußere Schicht der Beschichtung die Interferenzpigmente enthält, und anschließend gemeinsam mit dem Dachziegel bei einer Temperatur von mindestens 400°C gebrannt wird.

Zusätzlich ist ein photokatalytisch aktiver Dachziegel, welcher die oben erwähnten Interferenzpigmente als photokatalytisch aktives Material in einer Engobe oder Glasur auf mindestens einer seiner Oberflächen enthält, Gegenstand der vorliegenden Erfindung.

Interferenzpigmente, die erfindungsgemäß als photokatalytisches Material in Engoben und Glasuren von Dachziegeln eingesetzt werden, sind solche Interferenzpigmente, die temperaturstabile plättchenförmige Substrate aufweisen, die mit einer Schicht aus Titandioxid beschichtet sind.

Als temperaturstabil im Sinne der Erfindung werden Pigmentsubstrate dann angesehen, wenn sie bei den sowohl im Herstellungsverfahren der Pigmente als auch im Herstellungsverfahren von Dachziegeln üblichen Kalzinier- und Brenntemperaturen bis mindestens 800°C, vorzugsweise bis mindestens 1000°C und besonders bevorzugt bis 1200°C nicht schmelzen, ihre plättchenförmige Form beibehalten und ihre chemische Zusammensetzung im wesentlichen nicht verändern.

Als plättchenförmige temperaturstabile Substrate im Sinne der Erfindung sind beispielsweise plättchenförmiger natürlicher oder synthetischer Glimmer, Kaolin, Talk, andere Schichtsilikate, SiO₂, Glas, Borosilikate, Al₂O₃, Metalloxide, Metalle, oder mit einer oder mehreren Schichten aus Metalloxiden, Metalloxidhydraten, Metallsuboxiden, Metallfluoriden, Metallnitriden, Metalloxynitriden oder Mischungen dieser Materialien beschichteter plättchenförmiger natürlicher oder synthetischer Glimmer, Kaolin, Talk, andere Schichtsilikate, SiO₂, Glas, Borosilikate, Al₂O₃, Metalloxide oder Metalle geeignet, so lange sie die obigen Voraussetzungen erfüllen.

Die Größe dieser Substrate ist an sich nicht kritisch. Die Substrate weisen in der Regel eine Dicke zwischen 0,01 und 5 µm, insbesondere zwischen 0,05 und 4,5 µm auf. Die Ausdehnung in der Länge bzw. Breite beträgt üblicherweise zwischen 1 und 250 µm, vorzugsweise zwischen 2 und 200 µm und insbesondere zwischen 2 und 100 µm. Sie besitzen in der Regel ein Aspektverhältnis (Verhältnis des Durchmessers zur Teilchendicke) von 2:1 bis 25000:1, und insbesondere von 3:1 bis 2000:1.

Als besonders geeignet haben sich plättchenförmiger natürlicher Glimmer, beispielsweise Muskovit-Glimmer, synthetischer Glimmer, plättchenförmiges SiO₂ und Glasplättchen erwiesen.

Der Einsatz von mit einer oder mehreren Schichten aus Metalloxiden, Metalloxidhydraten, Metallsuboxiden, Metallfluoriden, Metallnitriden, Metalloxynitriden oder Mischungen dieser Materialien beschichteten plättchenförmigen Trägern aus den oben angegebenen Materialien als Substrate ist insbesondere dann vorteilhaft, wenn neben der photokatalytischen Eigenschaft der genannten Interferenzpigmente auch deren Farbeigenschaften, d.h. deren Interferenzfarben, ausgenutzt werden sollen, um den damit versetzten Engoben oder Glasuren zusätzliche Farbeffekte zu verleihen.

Die Metalloxid-, Metalloxidhydrat-, Metallsuboxid-, Metallfluorid-, Metallnitrid, Metalloxynitridschichten oder die Mischungen dieser Materialien können niedrig- (Brechzahl <1,8) oder hochbrechend (Brechzahl ≥ 1,8) sein. Als Metalloxide und Metalloxidhydrate eignen sich alle gängigen als Schichten aufbringbaren derartigen Verbindungen, wie z.B. Aluminiumoxid, Aluminiumoxidhydrat, Siliziumoxid, Siliziumoxidhydrat, Eisenoxid, Eisenoxidhydrat, Zinnoxid, Ceroxid, Zinkoxid, Zirkoniumoxid, Chromoxid, Titanoxid, insbesondere Titandioxid, Titandioxidhydrat sowie Mischphasen hieraus, wie z.B. Ilmenit oder Pseudobrookit. Als Metallsuboxide können beispielsweise die Titansuboxide eingesetzt werden. Als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metallfluorid- und/oder Metalloxidhydratschichten und ganz besonders bevorzugt Metalloxid- und Metalloxidhydratschichten auf den plättchenförmigen Trägermaterialien aufgebracht.

Zwar kann auch eine einzige Titandioxidschicht, die auf einen plättchenförmigen Träger aufgebracht wird, zu unterschiedlichen Interferenzfarben der so hergestellten Interferenzpigmente führen, wenn jeweils unterschiedliche Schichtdicken der Titandioxidschicht gewählt werden. Es ist jedoch bekannt, dass beispielsweise Farbfloppeffekte, sofern erwünscht, oftmals besser über einen Mehrschichtaufbau der Interferenzpigmente erzielbar sind, bei dem sich auf einem plättchenförmigen Träger vorzugsweise Schichten mit hoher und niedriger Brechzahl miteinander abwechseln, wobei in der Regel Schichten mit hoher Brechzahl die äußerste Schicht des Pigmentes bilden. Der Fachmann ist dabei ohne weiteres in der Lage, aus den oben angegebenen Materialien die Materialien mit hoher und niedriger Brechzahl auszuwählen. Ein bevorzugtes hochbrechendes Material ist beispielsweise TiO₂, während als niedrigbrechendes Material bevorzugt SiO₂ eingesetzt wird.

Für die Wirksamkeit der Interferenzpigmente gemäß der vorliegenden Erfindung spielen deren Interferenzeffekte aber nur dann eine Rolle, wenn zusätzlich zur photokatalytischen Wirksamkeit der Interferenzpigmente Interferenzfarbeffekte erwünscht sind. Aus diesem Grund soll hier auf die an sich bekannten Interferenzeffekte von Interferenzpigmenten nicht näher eingegangen werden. Zudem ist es auch möglich, über die gezielte Auswahl der Schichtdicken von ein-oder mehrschichtigen Beschichtungen auf dem Trägermaterial die Interferenzeigenschaften der Pigmente nahezu völlig zu eliminieren, wenn dies gewünscht sein sollte.

Für die Ausführbarkeit der vorliegenden Erfindung ist es wichtig, dass die Interferenzpigmente eine Schicht aus Titandioxid aufweisen, die auf ein temperaturstabiles Substrat, welches aus den oben beschriebenen Substraten ausgewählt ist, aufgebracht ist.

Um besondere Farbeffekte zu erzeugen kann es dabei auch vorteilhaft sein, Mischungen aus verschiedenen der oben angegebenen Substrate einzusetzen. Dabei können sowohl die Substrate an sich gemischt und nachfolgend mit TiO₂ beschichtet werden, oder verschiedenen Substrate werden jeweils mit TiO₂ beschichtet und anschließend gemischt.

Vorzugsweise ist die Titandioxidschicht beidseitig auf dem Substrat aufgebracht und insbesondere umhüllt sie das temperaturstabile Substrat vollständig beziehungsweise weitestgehend vollständig.

Die Dicke der Titandioxidschicht beträgt im allgemeinen 1 bis 400 nm, vorzugsweise 5 bis 250 nm und insbesondere 10 bis 200 nm.

Sofern sich auf einem plättchenförmigen Trägermaterial, wie vorab beschrieben, bereits andere Schichten aus Metalloxiden etc. befinden, ist es bevorzugt, dass auch diese Schichten beidseitig auf dem Trägermaterial aufgebracht sind bzw. dieses weitestgehend umhüllen. Die Dicke dieser Schichten beträgt, unabhängig von ihrer Brechzahl, im allgemeinen 2 bis 350 nm und wird je nach gewünschter Farbwirkung ausgewählt.

Die Schicht aus Titandioxid stellt in einer besonders bevorzugten Ausführungsform die äußerste Schicht der Interferenzpigmente dar. Das bedeutet, dass die erfindungsgemäß eingesetzten Interferenzpigmente vorzugsweise keine der üblichen, so genannten Nachbeschichtungen oder Nachbehandlungen erfahren, die bei Interferenzpigmenten oft zur Verbesserung ihrer Dispergierbarkeit, ihrer Anpassung an die Anwendungsmedien, ihrer mechanischen und/oder koloristischen Stabilität und dergleichen ausgeführt werden.

Unter Titandioxid im Sinne der vorliegenden Erfindung wird sowohl reines Titandioxid in kristalliner Form als auch Titandioxidhydrat mit unterschiedlichen Anteilen von Wasser verstanden. Dies ist der Tatsache geschuldet, dass im u. a. üblichen nasschemischen Herstellungsverfahren der Interferenzpigmente Titanoxidhydrat durch Hydrolyse von insbesondere anorganischen Metallsalzen auf einem plättchenförmigen Substrat ausgefällt wird und anschließend mittels eines Kalzinierprozesses im wesentlichen in Titandioxid überführt wird. Der Fall der nicht ganz vollständigen Überführung in kristallines Titandioxid soll hier mit eingeschlossen sein.

Vorzugsweise liegt das Titandioxid im Interferenzpigment in der Rutilmodifikation oder zumindest überwiegend, d.h. mit einem Anteil von mehr als 50 Gew.%, vorzugsweise mehr als 60 Gew.% und insbesondere mehr als 70 Gew.%, bezogen auf die Gesamtmenge an TiO₂, in der Rutilmodifikation vor.

Das Titandioxid kann jedoch auch in der Anatasmodifikation beziehungsweise zumindest überwiegend in der Anatasmodifikation vorliegen.

Bevorzugt wird ein Interferenzpigment eingesetzt, welches aus einem Substrat aus natürlichem Glimmer oder synthetischem Glimmer und einer darauf befindlichen Schicht aus Titandioxid in der Anatas- oder Rutilmodifikation oder einer Mischung aus Anatas- und Rutilmodifikation besteht. Das Substrat ist dabei vorzugsweise beidseitig mit der Titandioxidschicht belegt, insbesondere aber vollständig oder zumindest nahezu vollständig von der Titandioxidschicht umhüllt.

Solche Pigmente sind als Produkte der Merck KGaA beispielsweise unter der Bezeichnung Iriodin® 100 und Iriodin® 103 im Handel verfügbar.

In einer besonders bevorzugten Ausführungsform der Erfindung werden Interferenzpigmente eingesetzt, die aus natürlichem Glimmer mit einer darauf befindlichen Schicht aus Titandioxid in der Rutilmodifikation bestehen.

Entgegen dem bekannten Stand der Technik, bei dem partikuläre Titandioxide in der reinen Anatasmodifikation oder zumindest überwiegend in der Anatasmodifikation eingesetzt werden, weil diese angeblich die höchste photokatalytische Aktivität aufweist, hat es sich mit dem erfindungsgemäßen Einsatz der Interferenzpigmente mit einer Titandioxidschicht überraschend herausgestellt, dass die Interferenzpigmente auch dann eine ausreichend hohe photokatalytische Aktivität aufweisen, wenn das darin enthaltene Titandioxid entweder ganz oder aber zu einem überwiegenden bzw. hohen Anteil aus der Rutilmodifikation besteht. Da in der Regel geglühte Interferenzpigmente eingesetzt werden, entsteht ein hoher Anteil an Rutilmodifikation zwangsläufig bei der Herstellung der Pigmente, da die Ausbildung der Rutilmodifikation in der Regel bei Temperaturen von ca. 700 bis 750°C einsetzt und die Interferenzpigmente standardmäßig bei mehr als 800°C, insbesondere mehr als 900°C und bevorzugt mehr als 950°C geglüht werden.

Auch in Bezug auf die Größe der Interferenzpigmente und die Kompaktheit der darauf befindlichen TiO₂-Schicht ist deren photokatalytische Aktivität eher überraschend, da in der Literatur ein diesbezüglich guter Effekt mit feinteiligen, insbesondere nanoskaligen, TiO₂-Partikeln in Verbindung gebracht wird. So ist eine gute photokatalytische Aktivität des nanopartikulären Produktes AEROXIDE® TiO₂P25 der Fa. Degussa, das ein Anatas/Rutil-Verhältnis von 80:20 aufweist, aus dem Stand der Technik bekannt.

Die Aufbringung der Titandioxidschicht auf dem plättchenförmigen Substrat kann nasschemisch aus organischen oder anorganischen Metallsalzen, mittels Sol-Gel-Verfahren, CVD- und/oder PVD-Verfahren erfolgen. Vorzugsweise erfolgt eine Beschichtung nasschemisch, und insbesondere nasschemisch mit anorganischen Ausgangsstoffen.

Die genannten Verfahren können dabei auch zur Aufbringung einfacher oder multipler Schichten auf dem Trägermaterial eingesetzt werden, die sich unterhalb der Titandioxidschicht befinden und gemeinsam mit dem Trägermaterial das plättchenförmige Substrat bilden. Ihre Zusammensetzung ist oben bereits beschrieben worden. Solche Verfahren sind an sich bekannt und im Stand der Technik ausführlich beschrieben worden.

Für die Aufbringung von Metalloxidschichten werden dabei bevorzugt die zur Beschichtung von Perlglanzpigmenten entwickelten Beschichtungsverfahren angewendet, die z.B. in DE 14 67 468, DE 19 59 998, DE 20 09 566, DE 22 14 545, DE 22 15 191, DE 22 44 298, DE 23 13 331, DE 15 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen beschrieben sind.

Bei der Nassbeschichtung werden die Substratpartikel in Wasser suspendiert und mit einem oder mehreren hydrolysierbaren, insbesondere anorganischen, Metallsalzen (für die Aufbringung der Titandioxidschicht z. B. geeigneten anorganischen Titansalzen wie Titantetrachlorid) bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und bei 50-150°C für 6-18 h getrocknet und 0,5-3 h geglüht, wobei die Glühtemperatur im Hinblick auf die jeweils vorliegende Beschichtung optimiert werden kann. In der Regel liegen die Glühtemperaturen zwischen 500 und 1200°C, vorzugsweise zwischen 600 und 1000°C, und insbesondere zwischen 750 und 950°C.

Falls gewünscht, können die Pigmente nach dem Aufbringen einzelner Beschichtungen abgetrennt, getrocknet und ggf. geglüht werden, um dann zur Ausfällung weiterer Schichten wieder resuspendiert zu werden.

Werden SiO₂-Schichten auf dem Substrat aufgebracht, erfolgt deren Ausfällung in der Regel durch Zugabe einer Kalium- oder NatronwasserglasLösung bei einem geeigneten pH-Wert. Hier sind jedoch ebenfalls andere Aufbringungsverfahren geeignet, wie beispielsweise das Aufbringen aus organischen Siliziumverbindungen oder der Auftrag über ein Sol-Gel-Verfahren.

Weiterhin kann eine Beschichtung auch in einem Wirbelbettreaktor durch Gasphasenbeschichtung erfolgen, wobei die in EP 0 045 851 und EP 0 106 235 zur Herstellung von Perlglanzpigmenten vorgeschlagenen Verfahren entsprechend angewendet werden können.

Gemäß der vorliegenden Erfindung wird das Substrat derart mit den verschiedenen oben beschriebenen Materialien beschichtet, dass die Schicht aus Titandioxid vorzugsweise die äußerste Beschichtung des fertigen Pigmentes darstellt.

Demzufolge wird auf die ansonsten üblichen verschiedenen Nachbeschichtungs- und Nachbehandlungsverfahren vorzugsweise verzichtet.

Die erfindungsgemäße photokatalytisch wirksame Engobe oder Glasur für Dachziegel ist auf mindestens einer Seite eines Dachziegels aufgebracht und liegt dort ein- oder mehrschichtig vor. Vorzugsweise ist die Engobe oder Glasur ein- oder zweischichtig auf dem Dachziegel vorhanden.

Wenn die Engobe oder Glasur einschichtig ausgebildet ist, werden die erfindungsgemäß als photokatalytisch aktives Material eingesetzten Pigmente einer Grundmasse der Engobe oder Glasur homogen beigemischt.

Als Grundmasse werden dabei die üblicherweise verwendeten keramischen Massen eingesetzt, die in der Regel zur Herstellung gebräuchlicher Engoben oder Glasuren für Dachziegel Verwendung finden.

Diese Grundmassen für Engoben enthalten zusätzlich zu den erfindungsgemäß verwendeten Interferenzpigmenten noch gebräuchliche Minerale oder Metalloxide, um die Oberflächenfarbe der Dachziegel zu verändern. Die eingesetzten Tone enthalten dabei in der Regel Mineralien wie Illit und/oder Montmorillonit, Kaolinit, Quarz, Feldspat, Hämatit und Goethit in wechselnder prozentualer Zusammensetzung. Zur Plastifizierung der Tone können zusätzlich verschiedene organische Verbindungen, Phosphate oder Soda eingesetzt werden. Für die zur Oberflächenbehandlung eingesetzten Engoben werden häufig rotbrennende und weißbrennende Tone verwendet, die mit Flussmitteln und färbenden Oxiden versetzt werden.

Grundmassen für Glasuren sind dagegen üblicherweise Mischungen aus Versatzstoffen (z. B. Al₂O₃, Quarzmehlen, Kreiden, MgCO₃), Flussmitteln, Ton und färbenden Oxiden, bzw. Fritten.

Für die Ausbildung einer einschichtigen Engobe oder Glasur werden die entsprechenden Grundmassen mit einer Menge von 0,1 bis 30 Gew.%, vorzugsweise 1 bis 15 Gew.%, und insbesondere 1 bis 5 Gew.% an Interferenzpigmenten, jeweils bezogen auf den Feststoffgehalt der Engobe oder Glasur, gemischt.

Soll dagegen die Engobe oder Glasur mehrschichtig ausgebildet werden, müssen zumindest der Grundmasse für die äußerste Schicht die photokatalytisch aktiven Interferenzpigmente beigemischt werden. Es ist jedoch selbstverständlich auch möglich, dass sowohl die Grundmasse für die äußerste Schicht als auch die Grundmasse(n) für eine oder mehrere darunter liegende Schichten der Engobe oder Glasur die photokatalytisch aktiven Interferenzpigmente enthält (enthalten).

Ist die Engobe oder Glasur mehrschichtig ausgebildet, so werden die photokatalytisch aktiven Interferenzpigmente der Grundmasse für die äußerste Schicht in einer Menge von vorzugsweise 0,01 bis 10 Gew.%, insbesondere von 1 bis 3 Gew.%, jeweils bezogen auf den Feststoffgehalt der Engobe oder Glasur, beigemischt, unabhängig vom Vorhandensein oder der Konzentration der Interferenzpigmente in den darunter liegenden Schichten.

Als Dachziegel werden die üblichen Tondachziegel verwendet. Diese werden aus den gebräuchlichen Rohtonen hergestellt, die prinzipiell die oben bereits beschriebene mineralogische Zusammensetzung aufweisen. Wie bereits bei den Engoben ausgeführt, werden der Rohtonmasse noch verschiedene Zusatzstoffe, beispielsweise organische Verbindungen, Phosphate oder Soda zugegeben.

Nach den üblichen Vorbereitungsarbeiten wie Rohtonabbau, Zerkleinerung, Haldenlagerung, Bewitterung, Einstellen des Wassergehaltes, Homogenisierung, Verdichtung und Vakuumbehandlung wird der Ton zu Tonsträngen verpresst, als Batzen entnommen und zu Ziegeln verpresst. Der so erhaltene Rohling wird über mehrere Stunden getrocknet, bis er eine Restfeuchte von etwa 1 % aufweist.

Üblicherweise erfolgt nun die Nachbeschichtung mit einer Engobe oder Glasur, die abschließend gemeinsam mit dem Dachziegel bei Temperaturen von ca. 1000°C über einen Zeitraum von mehreren Stunden gebrannt wird.

Statt der üblicherweise eingesetzten Grundmassen für Engoben oder Glasuren werden erfindungsgemäß Grundmassen für Engoben oder Glasuren eingesetzt, die die oben angegebenen Mengen an photokatalytisch aktiven Interferenzpigmenten enthalten.

Soll die erfindungsgemäß eingesetzten Engobe eine besonders glatte Oberfläche aufweisen, kann eine zusätzliche Behandlung des Engobetones stattfinden.

Der Engobeton ist der Hauptbestandteil einer üblichen Engobe. Dieser weist häufig einen Kornaufbau auf, der erhebliche Mengen an Überkorn enthält (grobe Korngröße der Partikel). Um das Überkorn zu entfernen, wird üblicherweise eine Nasssiebung des in Wasser gelösten Engobetones durchgeführt.

Für die vorliegende Erfindung hat es sich jedoch als besonders vorteilhaft erwiesen, wenn der in Wasser gelöste Engobeton einer Sedimentationsbehandlung unterzogen wird. Zu diesem Zwecke wird der gelöste Engobeton im einfachsten Falle für einen bestimmten Zeitraum, beispielsweise von etwa einer Stunde, ruhen gelassen, woraufhin der Teil der Engobe abgeleitet wird, der sich nicht an der Bodenfläche des Behältes abgesetzt hat.

Auf diese Weise wird eine besonders feinkörnige Engobe (mittlere Korngröße kleiner 60 µm) erhalten, in der sich die erfindungsgemäß eingesetzten Interferenzpigmente besonders homogen verteilen und parallel zur Oberfläche anordnen können, so dass die daraus schließlich entstehende gebrannte Engobe eine besonders glatte Oberfläche aufweist, in der sich die Interferenzpigmente dachziegelartig anordnen.

Die Grundmassen können sowohl auf einen bereits gebrannten Dachziegel (welcher ohne Engobe oder Glasur gebrannt wurde), als auch auf einen noch ungebrannten Dachziegel aufgebracht werden.

Wird die Grundmasse für die erfindungsgemäße Engobe oder Glasur in einer oder mehreren Schichten auf den Dachziegel aufgebracht, so ist dafür zu sorgen, dass zumindest die äußerste dieser Schichten die genannten Interferenzpigmente in homogener Verteilung enthält, und dass diese äußerste Schicht bei einer Temperatur von mindestens 400°C gemeinsam mit dem Dachziegel gebrannt wird.

Wird nur eine einzige Schicht als Engobe oder Glasur aufgebracht, in der die Interferenzpigmente homogen verteilt sind, so wird diese Schicht mit dem Dachziegel bei einer Temperatur von mindestens 800°C gebrannt.

Wird dagegen eine zweischichtige Beschichtung aufgebracht, so beträgt die Mindestbrenntemperatur für die erste Schicht direkt auf dem Dachziegel 800°C, während die zweite Schicht bei einer Mindesttemperatur von 400°C gebrannt werden muss, um befriedigende Oberflächen zu erhalten.

Vorzugsweise liegen die Brenntemperaturen sowohl für die erste als auch für die zweite Schicht jeweils deutlich höher, nämlich bei Temperaturen von 850 bis 1000°C für die erste Schicht und 500 bis 1000°C für die zweite Schicht.

Gegenstand der vorliegenden Erfindung sind auch photokatalytisch wirksame Engoben oder Glasuren für Dachziegel, welche als photokatalytisch aktive Substanz Interferenzpigmente auf der Basis von mit einer Schicht aus Titandioxid beschichteten temperaturstabilen plättchenförmigen Substraten enthalten.

Wie bereits vorab beschrieben, werden diese Engoben oder Glasuren als ein- oder mehrschichtige Beschichtung auf mindestens eine Oberfläche eines gebrannten oder ungebrannten Dachziegels aufgebracht, wobei die Interferenzpigmente in der einschichtigen Beschichtung homogen verteilt vorliegen und im Falle einer mehrschichtigen Beschichtung zumindest in der äußersten Schicht der Beschichtung homogen verteilt vorliegen. Dabei beträgt die Brenntemperatur für die äußerste Beschichtung mindestens 400°C, wobei die äußerste Schicht gemeinsam mit dem Dachziegel gebrannt wird, unabhängig davon, ob dieser bereits vorab gebrannt wurde.

Wird die Grundmasse für die Engobe oder Glasur in einer einzigen Schicht auf einen gebrannten oder ungebrannten Dachziegel aufgebracht, wird diese Schicht bei einer Temperatur von mindestens 800°C gemeinsam mit dem Dachziegel gebrannt.

Besteht die Beschichtung aus einer erfindungsgemäßen Engobe oder Glasur aus zwei Schichten auf einem gebrannten oder ungebrannten Dachziegel, dann enthält mindestens die äußerste dieser Schichten Interferenzpigmente in homogener Verteilung. In diesem Falle wird die erste Schicht, die optional ebenfalls Interferenzpigmente in homogener Verteilung enthalten kann, bei einer Temperatur von mindestens 800°C und die zweite Schicht bei einer Temperatur von mindestens 400°C gemeinsam mit dem Dachziegel gebrannt.

Wie oben jedoch bereits beschrieben, liegen die optimalen Brenntemperaturen für die äußerste und die ggf. darunter liegenden Schichten der Engobe oder Glasur jedoch höher, nämlich im Rahmen der oben beschriebenen Werte.

Es ist besonders vorteilhaft, wenn das Aufbringen der erfindungsgemäßen Engoben oder Glasuren so in den üblichen Herstellungsprozess von Dachziegeln integriert wird, dass die nötigen Prozessänderungen und Anpassungen so gering wie möglich sind. Man arbeitet daher bevorzugt im Rahmen der üblicherweise eingesetzten Brenntemperaturen.

Wie oben bereits erwähnt, enthalten die erfindungsgemäßen Engoben oder Glasuren zur Farbgebung zusätzlich Mineralien oder Metalloxide. Diese entsprechen dann den üblicherweise eingesetzten Mineralien und Metalloxiden, die je nach regionalem Geschmacksempfinden oder traditioneller Ausrichtung sehr häufig in rötlichen, rotbraunen und schwarzen Farbtönen, aber auch öfter in bläulichen oder grünlichen Farbtönen eingesetzt werden.

Die erfindungsgemäß als photokatalytisch aktives Material eingesetzten Interferenzpigmente haben den Vorteil, dass sie bedarfsweise auch so hergestellt werden können, dass sie neben der photokatalytischen Aktivität auch Interferenzfarben aufweisen. Je nach eingesetztem Beschichtungsmaterial und Dicke der Schichten lassen sich diese in einem breiten Rahmen nach Wunsch variieren. So sind neben silbrig oder goldig schimmernden Pigmenten auch klare Farben wie Rot, Blau oder Grün in verschiedenen Abstufungen möglich, so dass ein großes Farbspektrum erzielbar ist. Variierend mit dem Anteil der Interferenzpigmente an den Grundmassen für Engoben oder Glasuren können so entweder nur durch die eingesetzten Interferenzpigmente oder durch Mischungen aus diesen mit den sonst üblicherweise eingesetzten farbgebenden Mineralien und Metalloxiden die verschiedensten Farbwirkungen der damit hergestellten Engoben oder Glasuren erzielt werden. Diese gehen über die reine Farbe hinaus und können auch zu changierenden Perlglanzeffekten oder so genannten Farb-Flopp-Effekten führen.

Die vorab beschriebenen Interferenzpigmente Iriodin® 100 und Iriodin® 103 der Merck KGaA weisen eine silbrigweiße Perlglanzfarbgebung auf, wenn sie in Beschichtungen eingesetzt werden.

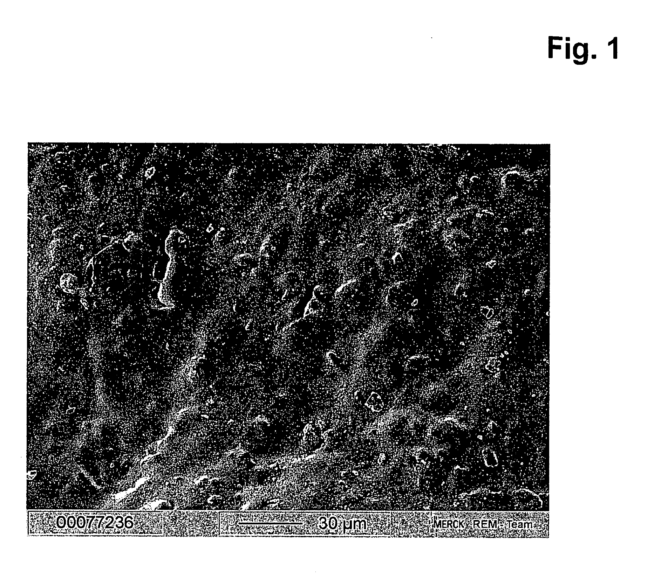

Engoben oder Glasuren, die ohne die erfindungsgemäß eingesetzten Perlglanzpigmente aufgebracht werden, sollen üblicherweise die Oberflächen der damit beschichteten porösen Dachziegel glätten, schützen, veredeln und ihnen Farbe verleihen. Trotzdem weisen die gebrannten Dachziegel auch mit den Engoben oder Glasuren noch poröse Oberflächen auf. An diesen können sich Schmutzpartikel oder organische Materie anlagern, so dass es nachfolgend zu Bewachsungen, Veralgungen oder Verschmutzungen kommt, die vom Regenwasser nicht entfernt werden können (Fig 1, REM-Aufnahme der Oberfläche einer üblichen Engobe).

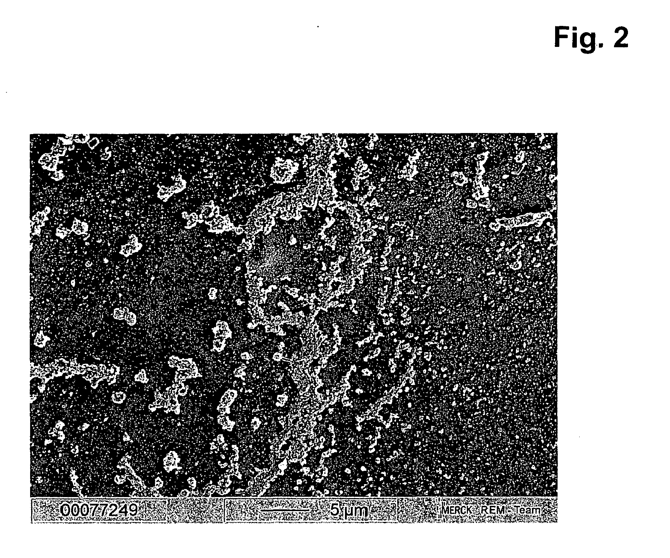

Die aus dem Stand der Technik bekannten selbstreinigenden Dachziegel mit Lotus*-Effekt*® zeigen dagegen Agglomerate von feinen TiO₂-Partikeln, die nicht gleichmäßig über die gesamte Oberfläche verteilt sind, aber den gewünschten Effekt einer Oberflächenstrukturierung ergeben, der maßgeblich für die Selbstreinigungsfunktion sein soll (Fig.2, REM-Aufnahme der Oberfläche eines handelsüblichen Dachziegels mit Lotus-*Effekt*®).

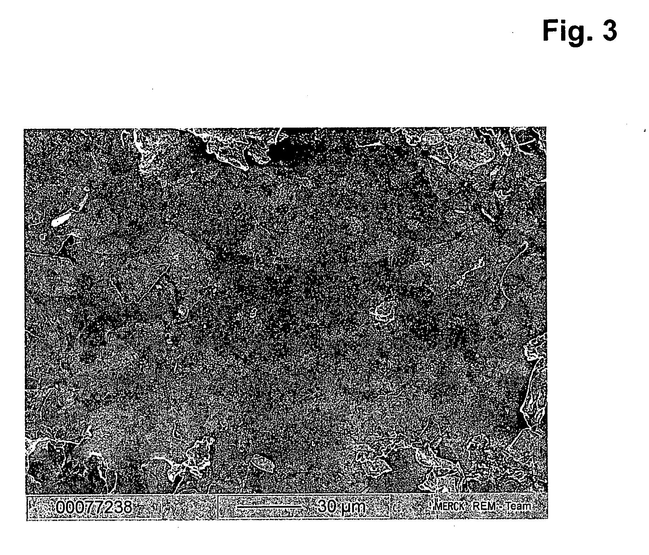

Dagegen weisen die erfindungsgemäßen Engoben oder Glasuren, die als photokatalytisch aktives Material Interferenzpigmente mit einer Beschichtung aus TiO₂ auf einem plättchenförmigen Substrat enthalten, nach dem Brennen und nachfolgendem Abkühlen vorzugsweise eine besonders glatte und dichte Oberflächenstruktur auf. (Fig. 3, REM-Aufnahme der Oberfläche einer Engobe, die unter Zusatz von 25 Gew.-% eines Interferenzpigmentes im Sedimentationsverfahren hergestellt wurde).

Obwohl sie nicht über eine spezielle Oberflächenstrukturierung gemäß dem Stand der Technik verfügen, sind die erfindungsgemäßen Engoben oder Glasuren dazu geeignet, das Bewachsen, Veralgen oder Bemoosen eines damit versehenen Dachziegels nachhaltig zu vermindern oder zu verhindern.

Gegenstand der vorliegenden Erfindung ist auch ein Verfahren zur Herstellung einer photokatalytisch aktiven Engobe oder Glasur für Dachziegel, bei welchem eine Grundmasse für eine Engobe oder Glasur mit Interferenzpigmenten auf der Basis von mit einer Schicht aus Titandioxid beschichteten temperaturstabilen plättchenförmigen Substraten als photokatalytisch aktive Substanz homogen gemischt und auf mindestens eine Oberfläche eines gebrannten oder ungebrannten Dachziegels in Form einer ein- oder mehrschichtigen Beschichtung aufgebracht wird, so dass zumindest die äußerste Schicht der Beschichtung die Interferenzpigmente enthält, und anschließend gemeinsam mit dem Dachziegel bei einer Temperatur von mindestens 400°C gebrannt wird.

Falls nur eine einzige Schicht als Beschichtung aufgebracht wird, wird diese, wie bereits vorab beschrieben, gemeinsam mit dem Dachziegel bei mindestens 800°C gebrannt.

Werden zwei Schichten als Beschichtung aufgebracht, wobei mindestens der Grundmasse der äußersten Schicht die Interferenzpigmente beigemischt werden, wird die erste Schicht bei mindestens 800°C und die zweite Schicht bei mindestens 400°C gemeinsam mit dem Dachziegel gebrannt.

Dabei erfolgt die Integration der Verfahrensstufen des Aufbringens und Brennens der Engobe oder Glasur auf den Dachziegelrohling vorteilhafterweise derart, dass der oben beschriebene übliche Prozessablauf nur unwesentlich angepasst oder geändert werden muss.

Wenn nur eine einschichtige Beschichtung mit einer Grundmasse für die erfindungsgemäße Engobe oder Glasur erfolgt, werden die Interferenzpigmente der Grundmasse in einer Menge von 0,1 bis 30 Gew. %, vorzugsweise von 1 bis 15 Gew. %, und insbesondere von 1 bis 5 Gew. %, bezogen auf den Feststoffgehalt der Engobe oder Glasur, beigemischt.

Wird dagegen eine mehrschichtige Beschichtung, und insbesondere eine zweischichtige Beschichtung aufgebracht, werden der Grundmasse für die erfindungsgemäße Engobe oder Glasur in der äußeren Schicht die Interferenzpigmente in einer Menge von 0,01 bis 10 Gew. %, und vorzugsweise von 1 bis 3 Gew. %, bezogen auf den Feststoffgehalt der Schicht, beigemischt, unabhängig von ihrem Vorhandensein oder der Konzentration in den darunter liegenden Schichten.

Dabei können wahlweise die sich auf dem Dachziegelrohling unterhalb der äußersten Schicht befindlichen weiteren ein oder mehreren Schichten ebenfalls die erfindungsgemäß eingesetzten Interferenzpigmente enthalten, vorzugsweise in den oben für die einschichtige Beschichtung angegebenen Mengen.

Außer den bereits beschriebenen Verfahrensstufen zur Herstellung der erfindungsgemäßen photokatalytisch aktiven Engobe oder Glasur sind alle anderen Verfahrensstufen dem Fachmann hinreichend bekannt, so dass er die Erfindung problemlos in die bereits vorhandenen Verfahrensabläufe integrieren kann.

Gegenstand der Erfindung ist auch ein photokatalytisch aktiver Dachziegel, welcher auf mindestens einer seiner Oberflächen, vorzugsweise auf der den verschiedenen Wettereinflüssen zugewandten Oberfläche, mit einer Engobe oder Glasur versehen ist, die als photokatalytisch aktiven Bestandteil die vorab beschriebenen Interferenzpigmente enthält.

Mit der vorliegenden Erfindung werden photokatalytisch aktive Engoben und Glasuren für Dachziegel und damit auch photokatalytisch aktive Dachziegel zur Verfügung gestellt, die das Bewachsen, Veralgen und Bemoosen von Dachziegeln mit ausreichender Aktivität nachhaltig verhindern, über ein in bestehende übliche Produktionsabläufe einfach zu integrierendes Verfahren hergestellt werden können, ohne dass nach dem Brennvorgang noch weitere Nachbehandlungen erfolgen müssen, mit am Markt leicht und kostengünstig verfügbaren Ausgangsstoffen realisiert werden können, und bei denen nicht die ggf. bei Nanomaterialien zu befürchtenden gesundheitlichen Risiken auftreten, da die entsprechenden Pigmente teilweise sogar zum Verzehr geeignet und zugelassen sind.

Damit stellt die erfindungsgemäße Verwendung von insbesondere handelsüblichen Interferenzpigmenten als photokatalytischer Bestandteil von Engoben und Glasuren für Dachziegel eine preiswerte und wirksame Lösung zur Verhinderung unerwünschten Bewuchses auf Dachflächen dar.

Die Erfindung soll nachfolgend an Hand von Beispielen und Figuren erläutert werden, die jedoch nicht als limitierend zu verstehen sind. Der Gegenstand der Figuren 1 bis 3 wurde bereits vorab beschrieben. Gegebenenfalls nicht in der Beschreibung detailliert beschriebene Ausführungsformen der Erfindung lassen sich den Patentansprüchen entnehmen.

### Beispiel 1:

In eine Engobe Altrot werden 21 g des Interferenzpigmentes Iriodin® 100 [TiO₂ (Anatas) auf Glimmer, Produkt der Merck KGaA] so eingearbeitet, dass eine homogene Vermischung des Pigmentes mit der Engobengrundmasse stattfindet. Der Anteil des Pigmentes in Gewichtsprozenten beträgt 2,5%.

Die so erhaltene modifizierte Engobengrundmasse wird auf einen ungebrannten Dachziegel aufgebracht und dieser bei 980°C für 54h gebrannt.
Der Dachziegel weist eine optisch ansprechende, glatte rote Oberfläche auf.

### Beispiel 2:

Beispiel 1 wird wiederholt, mit der Ausnahme, dass statt 2,5 Gew. % Iriodin® 100 insgesamt 5 Gew. % (hier 20 g) in die Engobengrundmasse eingearbeitet werden. Die Brenntemperatur beträgt 985°C, die Brenndauer 24h.
Die Dachziegeloberfläche ist glatt und weist einen roten, angenehmen Farbton auf.

### Beispiel 3:

Beispiel 1 wird wiederholt, mit der Ausnahme, dass 2,5 Gew. % Iriodin® 103 (20 g) [TiO₂ (Rutil) auf Glimmer, Produkt der Merck KGaA] in die Engobengrundmasse eingearbeitet werden. Die Brenntemperatur beträgt 985°C, die Brenndauer 24h.
Es wird ein Dachziegel mit einer glatten roten Oberfläche erhalten, die keine optischen Beeinträchtigungen aufweist.

### Beispiel 4:

Beispiel 1 wird wiederholt, mit der Ausnahme, dass 5,0 Gew. % Iriodin® 103 (hier 20 g) in die Engobengrundmasse eingearbeitet werden. Brenntemperatur und -dauer entsprechen denen in Beispiel 1. Der resultierende Dachziegel weist eine optisch ansprechende, rote Oberfläche auf.

### Abbaugeschwindigkeit von DCA-Lösung:

In einer Versuchsanlage mit Belichtungsfeld werden plane Riemchen mit einer Fläche von ca. 0,02 m², die aus den in den Beispielen 1 bis 4 hergestellten Dachziegeln herausgeschnitten werden, hinsichtlich ihres Abbaus von Dichloressigsäure (DCA) vermessen. Die DCA-Abbaugeschwindigkeit wird in mg TOC/m²*h (TOC = Total Organic Carbon) ausgewiesen.

### Die Versuchanlage ist wie folgt aufgebaut:

Auf einer geneigten Ebene werden die Riemchen befestigt. Die Plattenneigung kann variiert werden, beträgt im vorliegenden Versuch jedoch 35°. Die geneigte Ebene wird mit einem Lampenfeld, bestehend aus 4 Leuchtstoffröhren der Fa. Philipps, Typ Cleo, 15W, bestrahlt, was eine homogene Intensität von 65 W/m² im relevanten UV-A-Bereich ergibt.

Ein Benetzungsversuch mit destilliertem Wasser ergibt, dass bei allen Proben (sowohl dunkel als auch bestrahlt) kein TOC-Anstieg beim Spülen mit destilliertem Wasser zu verzeichnen ist, die Riemchen sich jedoch gut benetzen lassen.

Im Kreislaufsystem werden die Riemchen von oben mit 1,0 I einer DCA-Lösung benetzt (Anfangskonzentration 5 mmol/l, entspricht 120 mg/l TOC, Anfangs-pH-Wert: 3,1). Die von den Riemchen ablaufende Lösung wird aufgefangen und erneut über die Riemchen geleitet, Der Kreislaufvolumenstrom beträgt 360 l/h*m. Die Versuchsdauer beträgt 120 Minuten.

Während der Versuchsdurchführung werden bei jeder Probe Volumenverluste durch Wasserverdunstung festgestellt, um die das Gesamtvolumen korrigiert wird.

In den entnommenen Proben von je ca. 40 ml wird die DCA-Abbaurate in mg TOC/m²*h ermittelt. Es werden die folgenden Werte gemessen:
Beispiel 1: 150,8 mg TOC/m²*h
Beispiel 2: 176,5 mg TOC/m²*h
Beispiel 3: 125,9 mg TOC/m²*h
Beispiel 4: 180,8 mg TOC/m²*h

### Vergleichsbeispiel:

Aus einem Dachziegel, welcher nach dem Brennen mit einer TiO₂-Schicht versehen wird, die aus nanoskaligem TiO₂ besteht (Einsatz von 5 g/l AEROXIDE® TiO₂P25 der Fa. Degussa; Anatas/Rutil-Verhältnis 80:20), wird nach dem Trocknen der Schicht ein Riemchen mit einer Fläche von ca. 0,02 m² herausgeschnitten. Dieses wird dem oben beschriebenen Versuchsablauf unterzogen. Es wird eine DCA-Abbaurate von 170 mg TOC/m²*h ermittelt.

Aus den Beispielen 1 bis 4 sowie dem Vergleichsbeispiel ist ersichtlich, dass mit den in den Beispielen in geringen Konzentrationen in Engoben eingesetzten Interferenzpigmenten DCA-Abbauraten erzielbar sind, die den DCA-Abbauraten von Schichten, die aus purem TiO₂ bestehen, vergleichbar sind.

In den angegebenen niedrigen Pigmentkonzentrationen beeinflussen die Interferenzpigmente das optische (farbliche) Erscheinungsbild der damit versetzten Engoben praktisch nicht.

### Bewitterungsversuche:

Auf einem Gestell zur Eindeckung von Dachziegeln werden unterschiedliche Dachziegel aufgebracht und über 12 Monate das Bewitterungsverhalten unter den normalen klimatischen Bedingungen im mitteleuropäischen Raum ermittelt.

Nach 12 Monaten kann auf Dachziegeln, welche gemäß den Beispielen 1 bis 4 hergestellt sind, kein nachhaltiger Bewuchs festgestellt werden. Die besten Ergebnisse werden mit Dachziegeln gemäß den Beispielen 1 und 3 erzielt, auf denen nahezu kein Bewuchs feststellbar ist.

## Patentansprüche

1. Verwendung von Interferenzpigmenten auf der Basis von mit einer Schicht aus Titandioxid beschichteten temperaturstabilen plättchenförmigen Substraten als photokatalytisch aktives Material in Engoben und Glasuren von Dachziegeln.

2. Verwendung gemäß Anspruch 1, **dadurch gekennzeichnet, dass** das temperaturstabile Substrat eine Temperaturstabilität bis mindestens 800°C aufweist.

3. Verwendung gemäß Anspruch 1 oder 2, **dadurch gekennzeichnet, dass** das Substrat aus plättchenförmigem natürlichem oder synthetischem Glimmer, Kaolin, Talk, einem anderen Schichtsilikat, SiO₂, Glas, einem Borosilikat, Al₂O₃, Metalloxiden, Metallen, oder aus mit einer oder mehreren Schichten aus Metalloxiden, Metalloxidhydraten, Metallsuboxiden, Metallfluoriden, Metallnitriden, Metalloxynitriden oder Mischungen dieser Materialien beschichtetem plättchenförmigem natürlichen oder synthetischen Glimmer, Kaolin, Talk, einem anderen Schichtsilikat, SiO₂, Glas, einem Borosilikat, Al₂O₃ , Metalloxid oder Metall besteht.

4. Verwendung gemäß einem oder mehreren der Ansprüche 1 bis 3, **dadurch gekennzeichnet, dass** die Schicht aus Titandioxid die äußerste Schicht des Interferenzpigmentes darstellt.

5. Verwendung gemäß einem oder mehreren der Ansprüche 1 bis 4, **dadurch gekennzeichnet, dass** das Titandioxid überwiegend in der Rutilmodifikation vorliegt.

6. Verwendung gemäß einem oder mehreren der Ansprüche 1 bis 5, **dadurch gekennzeichnet, dass** die plättchenförmigen Substrate beidseitig mit einer Schicht aus Titandioxid beschichtet, insbesondere mit einer Schicht aus Titandioxid weitestgehend umhüllt sind.

7. Verwendung gemäß einem oder mehreren der Ansprüche 1 bis 6, **dadurch gekennzeichnet, dass** das Interferenzpigment aus natürlichem Glimmer und einer darauf befindlichen Schicht aus Titandioxid in der Anatas- oder Rutilmodifikation oder einer Mischung aus Anatas- und Rutilmodifikation besteht.

8. Verwendung gemäß einem oder mehreren der Ansprüche 1 bis 7, **dadurch gekennzeichnet, dass** die Interferenzpigmente photokatalytisch aktiv sind und Interferenzfarben aufweisen.

9. Verwendung gemäß einem oder mehreren der Ansprüche 1 bis 8, **dadurch gekennzeichnet, dass** es sich bei den Interferenzpigmenten um geglühte Interferenzpigmente handelt.

10. Verwendung gemäß einem oder mehreren der Ansprüche 1 bis 9, **dadurch gekennzeichnet, dass** die Engobe oder Glasur ein- oder mehrschichtig ausgebildet ist.

11. Verwendung gemäß einem oder mehreren der Ansprüche 1 bis 10, **dadurch gekennzeichnet, dass** die Engobe oder Glasur einschichtig ausgebildet ist und die Interferenzpigmente einer Grundmasse der ungebrannten Engobe oder Glasur homogen beigemischt werden.

12. Verwendung gemäß Anspruch 11, **dadurch gekennzeichnet, dass** die Interferenzpigmente der Grundmasse der Engobe oder Glasur in einer Menge von 0,1 bis 30 Gew. %, bezogen auf den Feststoffgehalt der Engobe oder Glasur, beigemischt werden.

13. Verwendung gemäß Anspruch 12, **dadurch gekennzeichnet, dass** die Interferenzpigmente in einer Menge von 1 bis 15 Gew. % beigemischt werden.

14. Verwendung gemäß Anspruch 12 oder 13, **dadurch gekennzeichnet, dass** die Interferenzpigmente in einer Menge von 1 bis 5 Gew. % beigemischt werden.

15. Verwendung gemäß einem oder mehreren der Ansprüche 1 bis 10, **dadurch gekennzeichnet, dass** die Engobe oder Glasur mehrschichtig ausgebildet ist und die Interferenzpigmente zumindest einer Grundmasse für die äußerste Schicht der Engobe oder Glasur homogen beigemischt werden.

16. Verwendung gemäß Anspruch 15, **dadurch gekennzeichnet, dass** die Interferenzpigmente der Grundmasse für die äußerste Schicht in einer Menge von 0,01 bis 10 Gew. %, bezogen auf den Feststoffgehalt der Schicht, beigemischt werden.

17. Verwendung gemäß Anspruch 16, **dadurch gekennzeichnet, dass** die Interferenzpigmente der Grundmasse für die äußerste Schicht in einer Menge von 1 bis 3 Gew. % beigemischt werden.

18. Verwendung gemäß einem oder mehreren der Ansprüche 1 bis 17, **dadurch gekennzeichnet, dass** die Grundmasse für eine Engobe oder Glasur in einer oder mehreren Schichten auf einen gebrannten oder ungebrannten Dachziegel aufgebracht wird, wobei mindestens die äußerste dieser Schichten Interferenzpigmente in homogener Verteilung enthält, und dass die äußerste Schicht bei einer Temperatur von mindestens 400°C gemeinsam mit dem Dachziegel gebrannt wird.

19. Verwendung gemäß Anspruch 18, **dadurch gekennzeichnet, dass** die Grundmasse für eine Engobe oder Glasur in einer einzigen Schicht auf einen gebrannten oder ungebrannten Dachziegel aufgebracht wird, wobei diese Schicht die Interferenzpigmente in homogener Verteilung enthält, und dass diese Schicht bei einer Temperatur von mindestens 800°C gemeinsam mit dem Dachziegel gebrannt wird.

20. Verwendung gemäß Anspruch 18, **dadurch gekennzeichnet, dass** die Grundmasse für eine Engobe oder Glasur in zwei Schichten auf einen gebrannten oder ungebrannten Dachziegel aufgebracht wird, wobei mindestens die äußerste dieser Schichten Interferenzpigmente in homogener Verteilung enthält, und dass die erste Schicht bei einer Temperatur von mindestens 800°C und die zweite Schicht bei einer Temperatur von mindestens 400°C gemeinsam mit dem Dachziegel gebrannt werden.

21. Photokatalytisch wirksame Engobe oder Glasur für Dachziegel, enthaltend als photokatalytisch aktive Substanz Interferenzpigmente auf der Basis von mit einer Schicht aus Titandioxid beschichteten temperaturstabilen plättchenförmigen Substraten.

22. Engobe oder Glasur gemäß Anspruch 21, **dadurch gekennzeichnet, dass** sie als ein- oder mehrschichtige Beschichtung auf mindestens eine Oberfläche eines gebrannten oder ungebrannten Dachziegels aufgebracht wird, wobei die Interferenzpigmente in der einschichtigen Beschichtung homogen verteilt vorliegen und im Falle einer mehrschichtigen Beschichtung zumindest in der äußersten Schicht der Beschichtung homogen verteilt vorliegen, und dass die äußerste Beschichtung bei mindestens 400°C gemeinsam mit dem Dachziegel gebrannt wird.

23. Engobe oder Glasur gemäß Anspruch 21 oder 22, **dadurch gekennzeichnet, dass** die Grundmasse für eine Engobe oder Glasur in einer einzigen Schicht auf einen gebrannten oder ungebrannten Dachziegel aufgebracht wird und dass diese Schicht bei einer Temperatur von mindestens 800°C gemeinsam mit dem Dachziegel gebrannt wird.

24. Engobe oder Glasur gemäß Anspruch 21 der 22 **dadurch gekennzeichnet, dass** die Grundmasse für eine Engobe oder Glasur in zwei Schichten auf einen gebrannten oder ungebrannten Dachziegel aufgebracht wird, wobei mindestens die äußerste dieser Schichten Interferenzpigmente in homogener Verteilung enthält, und dass die erste Schicht bei einer Temperatur von mindestens 800°C und die zweite Schicht bei einer Temperatur von mindestens 400°C gemeinsam mit dem Dachziegel gebrannt werden.

25. Engobe oder Glasur gemäß einem oder mehreren der Ansprüche 21 bis 24, **dadurch gekennzeichnet, dass** sie zur Farbgebung zusätzlich Mineralien oder Metalloxide enthält.

26. Engobe oder Glasur gemäß einem oder mehreren der Ansprüche 21 bis 25, **dadurch gekennzeichnet, dass** eine wässrige Zubereitung der Grundmasse für die Engobe oder Glasur vor dem Zumischen von partikulären Additiven und der photokatalytisch aktiven Interferenzpigmente einem Sieb- und/oder Sedimentationsverfahren unterzogen wird.

27. Engobe oder Glasur gemäß einem oder mehreren der Ansprüche 21 bis 26, **dadurch gekennzeichnet, dass** sie das Bewachsen, Veralgen oder Bemoosen eines damit versehenen Dachziegels nachhaltig vermindert oder verhindert.

28. Verfahren zur Herstellung einer photokatalytisch aktiven Engobe oder Glasur für Dachziegel gemäß einem oder mehreren der Ansprüche 21 bis 27, **dadurch gekennzeichnet, dass** eine Grundmasse für eine Engobe oder Glasur mit Interferenzpigmenten auf der Basis von mit einer Schicht aus Titandioxid beschichteten temperaturstabilen plättchenförmigen Substraten als photokatalytisch aktive Substanz homogen gemischt und auf mindestens eine Oberfläche eines gebrannten oder ungebrannten Dachziegels in Form einer ein- oder mehrschichtigen Beschichtung aufgebracht wird, so dass zumindest die äußerste Schicht der Beschichtung die Interferenzpigmente enthält, und anschließend gemeinsam mit dem Dachziegel bei einer Temperatur von mindestens 400°C gebrannt wird.

29. Verfahren gemäß Anspruch 28, **dadurch gekennzeichnet, dass** nur eine einzige Schicht als Beschichtung aufgebracht wird, die gemeinsam mit dem Dachziegel bei mindestens 800°C gebrannt wird.

30. Verfahren gemäß Anspruch 28, **dadurch gekennzeichnet, dass** zwei Schichten als Beschichtung aufgebracht werden, wobei mindestens der Grundmasse der äußersten Schicht die Interferenzpigmente beigemischt werden, und dass die erste Schicht bei mindestens 800°C und die zweite Schicht bei mindestens 400°C gemeinsam mit dem Dachziegel gebrannt werden.

31. Verfahren gemäß Anspruch 28 oder 29, **dadurch gekennzeichnet, dass** die Interferenzpigmente der Grundmasse der Engobe oder Glasur in einer Menge von 0,1 bis 30 Gew. %, bezogen auf den Feststoffgehalt der Engobe oder Glasur, beigemischt werden, wenn die Beschichtung einschichtig aufgebracht wird.

32. Verfahren gemäß Anspruch 31, **dadurch gekennzeichnet, dass** die Interferenzpigmente in einer Menge von 1 bis 15 Gew. % beigemischt werden.

33. Verfahren gemäß Anspruch 31 oder 32, **dadurch gekennzeichnet, dass** die Interferenzpigmente in einer Menge von 1 bis 5 Gew. % beigemischt werden.

34. Verfahren gemäß Anspruch 28 oder 30, **dadurch gekennzeichnet, dass** die Interferenzpigmente der Grundmasse für die äußerste Schicht der Beschichtung in einer Menge von 0,01 bis 10 Gew. %, bezogen auf den Feststoffgehalt der Schicht, beigemischt werden, wenn die Beschichtung mehrschichtig aufgebracht wird.

35. Verfahren gemäß Anspruch 34, **dadurch gekennzeichnet, dass** die Interferenzpigmente in einer Menge von 1 bis 3 Gew. % beigemischt werden.

36. Verfahren gemäß einem oder mehreren der Ansprüche 28 bis 35, **dadurch gekennzeichnet, dass** eine wässrige Zubereitung der Grundmasse für die Engobe oder Glasur vor dem Zumischen von partikulären Additiven und der photokatalytisch aktiven Interferenzpigmente einem Sieb- und/oder Sedimentationsverfahren unterzogen wird.

37. Photokatalytisch aktiver Dachziegel, umfassend auf mindestens einer Oberfläche eine Engobe oder Glasur gemäß einem oder mehreren der Ansprüche 21 bis 27.
